# EUROPÄISCHE PATENTSCHRIFT

(11) **EP 0 970 449 B1**
(45) Veröffentlichungstag und Bekanntmachung des Hinweises auf die Patenterteilung: **22.09.2004**
(21) Anmeldenummer: 98916888.5
(22) Anmeldetag: 05.03.1998
(51) Int. Cl.: G07F 7/10, H04L 9/00

(54) **TRAGBARER DATENTRÄGER UND VERFAHREN ZU DESSEN KRYPTOGRAPHISCH GESICHERTEN BENUTZUNG MIT AUSTAUSCHBAREN KRYPTOGRAPHISCHEN SCHLÜSSELN**
PORTABLE DATA CARRIER AND METHOD FOR CRYPTOGRAPHICALLY SECURE USE THEREOF WITH INTERCHANGEABLE KEYS
SUPPORT DE DONNEES PORTABLE ET PROCEDE PERMETTANT SON UTILISATION DE FA ON PROTEGEE PAR VOIE CRYPTOGRAPHIQUE AVEC DES CLES DE CHIFFREMENT INTERCHANGEABLES

(30) Priorität: 06.03.1997 DE 19709274
(43) Veröffentlichungstag der Anmeldung: 12.01.2000
(73) Patentinhaber: Deutsche Telekom AG, 53113 Bonn (DE)
(72) Erfinder: HARTLEIF, Siegfried, D-64823 Gro -Umstadt (DE); SCHAEFER-LORINSER, Frank, D-64372 Ober-Ramstadt (DE)
(86) Internationale Anmeldenummer: PCT/EP1998/001269
(87) Internationale Veröffentlichungsnummer: WO 1998/039745

(56) Entgegenhaltungen:
- WO-A-96/07994
- FR-A- 2 681 165
- GB-A- 2 227 111
- US-A- 4 605 820
- US-A- 4 731 840

## Beschreibung

Die Erfindung betrifft einen tragbaren Datenträger, insbesondere Chipkarte, zum Speichern von Daten in Form von Datensätzen, wobei zur Absicherung des Schreibens und Lesens der Datensätze kryptographische Schlüssel auf dem Datenträger gespeichert sind, sowie ein Verfahren zur Benutzung des Datenträgers.

Im täglichen Leben werden häufig Berechtigungen erworben; Beispiele dafür sind die Berechtigung zur Benutzung von Verkehrsmitteln oder Schwimmbädern. Auf sogenannten Chipkarten, die oft zur Abrechnung von Geldbeträgen verwendet werden, also zum Beispiel eine elektronische Geldbörse enthalten, werden heutzutage auch Berechtigungen in elektronischer Form gespeichert.

Damit stehen Mittel zur Verfügung, die ein umfassendes Abrechnungssystem ermöglichen, in dem mit Hilfe nur einer Chipkarte je Benutzer elektronische Berechtigungen benutzt werden, in dem mit elektronischem Geld bezahlt wird, und andere Transaktionen möglich sind.

Da die sichere Speicherung kryptographischer Schlüssel einen potentiellen Schwachpunkt bezüglich der Sicherheit eines solchen Systems darstellt, möchte man die Verwendbarkeit eines Schlüssels zeitlich so eingrenzen, daß ein Betrug durch Mißbrauch von Schlüsseln aus Zeitgründen erschwert oder gar unmöglich wird. Daher stattet man zum Beispiel in regelmäßigen Abständen neu ausgegebene Chipkarten mit neu gewählten Schlüsseln aus. Die mit den Chipkarten kommunizierenden Sicherheitsmodule in den Endgeräten des Systems, die aus Kostengründen nur zeitweilig mit den diversen Verrechnungsstellen verbunden sind und in der restlichen Zeit selbständig arbeiten, müssen in diesem Fall jedoch über mehrere Generationen von Hauptschlüsseln verfügen, um alle gültigen Karten unterstützen zu können.

Falls kein extrem hoher physikalischer Schutz der Sicherheitsmodule gegeben ist, stellen die langlebigen Hauptschlüssel in den Sicherheitsmodulen selbst einen sicherheitstechnischen Schwachpunkt dar.

Aus dem Dokument FR-A-2 681 165 is ein tragbarer Datenträger bekannt, der die Merkmale des Oberbegriffes des Anspruchs 1 aufweist.

Der Erfindung liegt nun die Aufgabe zugrunde, eine Änderung von möglicherweise aus Sicherheitsmodulen ausgespähten Schlüsseln zu ermöglichen, ohne daß damit alle betroffenen Chipkarten ausgetauscht werden müssen. Im Falle eines Diebstahls von Hauptschlüsseln eines Sicherheitsmoduls muß es möglich sein, die entsprechenden Gegenstücke auf allen im Umlauf befindlichen Chipkarten unwirksam zu machen.

Erfindungsgemäß wird diese Aufgabe bei einem tragbaren Datenträger, insbesondere einer Chipkarte, dadurch gelöst, daß eine Reihe von Schlüsseln für den jeweiligen Verwendungszweck auf dem Datenträger gespeichert ist und daß Mittel zur Unbrauchbarmachung von Schlüsseln im Datenträger vorgesehen sind.

Die Schlüssel werden im Normalfall eine bestimmte Zeit lang benutzt und auf Befehl einer Zentrale hin bei der nächsten Verwendung der Chipkarte unbrauchbar gemacht. Gleichzeitig erhalten alle Sicherheitsmodule neue Hauptschlüssel, passend zu den auf den Chipkarten aktivierten neuen Schlüsseln. Diesen Befehl kann man auch dann geben, wenn der bloße Verdacht eines Betrugsversuchs besteht oder wenn ein Sicherheitsmodul gestohlen wurde. Ein potentieller Betrüger hat damit wenig Zeit, einen Betrug gewinnbringend auszuführen.

Eine erste Weiterbildung des erfindungsgemäßen Datenträgers besteht darin, daß als Mittel zur Unbrauchbarmachung ein Zähler vorgesehen ist, wobei jedem Schlüssel auf dem Datenträger ein Zählerwert zugeordnet ist, daß der Zähler nicht dekrementierbar ist und daß diejenigen Schlüssel unbrauchbar sind, deren Zählerwert kleiner als der Zählerstand ist. Es wird nun auf Befehl einer Zentrale hin bei der nächsten Verwendung der Chipkarte der Zähler inkrementiert und damit ist der bis dahin verwendete Schlüssel ungültig. Sämtliche Sicherheitsmodule werden mit neuen Hauptschlüsseln versorgt. Der Benutzer nimmt von dem Vorgang keine Notiz.

Eine andere Weiterbildung des erfindungsgemäßen Datenträgers sieht Speicherplatz vor zur Aufnahme eines Identifikationsmerkmals des zum Schreiben eines Datensatzes zuletzt verwendeten Schlüssels, beispielsweise des dem Schlüssel zugeordneten Zählerwertes. Bei einer dritten Weiterbildung ist vorgesehen, daß zu jedem Datensatz Speicherplatz vorgesehen ist, worin ein Identifikationsmerkmal desjenigen Schlüssels speicherbar ist, mit dem der Datensatz zuletzt geschrieben wurde. Diese Maßnahmen ergeben eine Kontrollmöglichkeit über die mit der Chipkarte zuletzt verwendeten Schlüssel - entweder für die gesamte Chipkarte oder für einzelne Datensätze, beispielsweise Berechtigungen.

Ein erfindungsgemäßer Vorgang, bei dem diese Kontrollmöglichkeit genutzt wird, ist bei dem erfindungsgemäßen Verfahren dadurch verwirklicht, daß vor jeder Benutzung eines Schlüssels zum Schreiben oder Lesen von Daten geprüft wird, ob der Schlüssel älter ist als derjenige, dessen Identifikationsmerkmal auf dem Datenträger gespeichert ist und daß bei positivem Ergebnis dieser Prüfung die Benutzung des Schlüssels abgelehnt wird. So könnte man in dem Fall beispielsweise die betroffene Chipkarte aus dem Verkehr ziehen, da sie offenbar fehlerhaft oder für einen Betrugsversuch mißbraucht worden ist.

Damit der Wechsel von einem alten Schlüssel zu einem neuen reibungslos und automatisch vonstatten geht, ist es vorteilhaft, wie es eine Weiterbildung des erfindungsgemäßen Verfahrens vorsieht, daß vor jeder Benutzung eines Schlüssels zum Schreiben oder Lesen von Daten geprüft wird, ob er neuer ist als derjenige, dessen Identifikationsmerkmal auf dem Datenträger gespeichert ist, daß bei positivem Ergebnis dieser Prüfung das gespeicherte Identifikationsmerkmal durch eines des neueren Schlüssels ersetzt wird und daß alle älteren Schlüssel auf dem Datenträger unbrauchbar gemacht werden. Auf diese Weise werden die Schlüssel auf der Chipkarte nach und nach verbraucht, bis die Gültigkeitsdauer der Chipkarte abgelaufen ist und sie ungültig wird.

Bei einer anderen vorteilhaften Weiterbildung des Verfahrens ist vorgesehen, daß ein zu lesender Datensatz, insbesondere Berechtigungsdatensatz, der mit einem über ein vorgegebenes Maß veralteten Schlüssel geschrieben ist, verworfen wird. Damit läßt sich vermeiden, daß gefälschte Berechtigungen, die mit einem entwendeten älteren Schlüssel erstellt wurden, genutzt werden können.

Ausführungsbeispiele der Erfindung sind in der Zeichnung anhand mehrerer Figuren dargestellt und in der nachfolgenden Beschreibung näher erläutert. Es zeigt:
- Fig. 1: ein Endgerät als Blockschaltbild sowie eine erfindungsgemäße Chipkarte,
- Fig. 2: ein Berechtigungssystem,
- Fig. 3: Schlüssel und Zähler erfindungsgemäßer Chipkarten und
- Fig. 4: den Vorgang beim Überprüfen eines Schlüssels.

Gleiche Teile sind in den Figuren mit gleichen Bezugszeichen versehen.

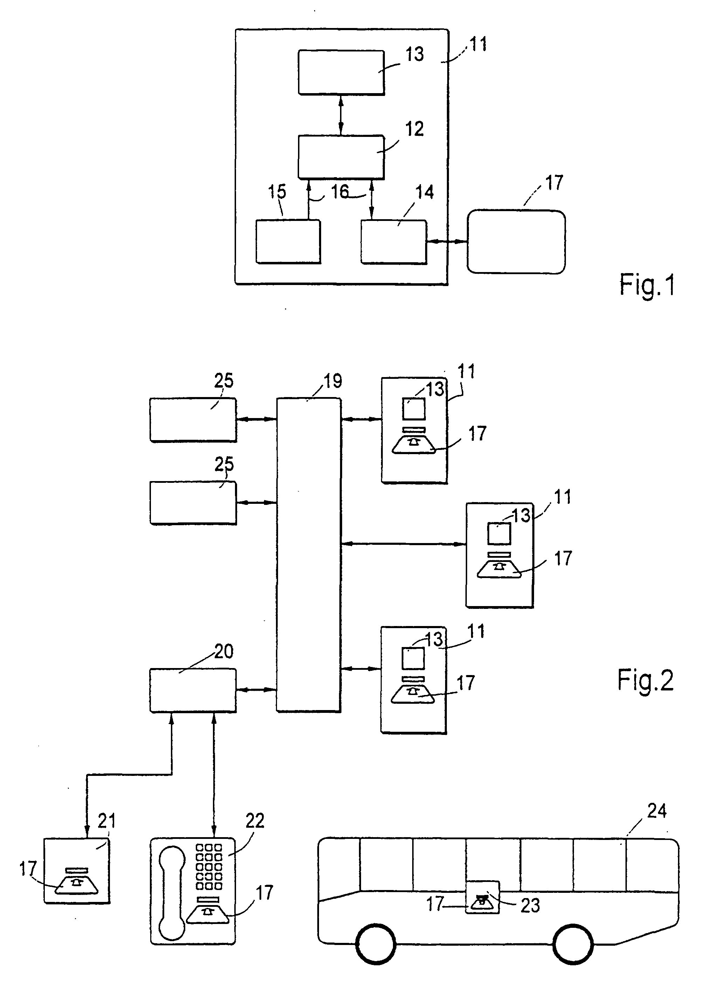

Das Blockschaltbild gemäß Fig. 1 umfaßt ein Endgerät 11, das einen Prozessor 12, ein Sicherheitsmodul 13 und ein Karten-Schreib- und Lesegerät 14 enthält. Ferner ist eine Tastatur 15 vorgesehen für Eingaben durch einen Benutzer, falls solche erforderlich sind. Das Sicherheitsmodul 13 ist derart gestaltet, daß Daten- und Programmänderungen sowie ein Auslesen von Programmen und Daten nicht möglich sind. Die einzelnen Baugruppen des Endgerätes 11 sind durch Datenleitungen 16 miteinander verbunden. In das Schreib- und Lesegerät 14 kann eine Chipkarte 17 eingeführt werden.

In dem Berechtigungssystem gemäß Fig. 2, das erfindungsgemäße Chipkarten 17 benutzt, werden die Sicherheitsmodule 13 der Endgeräte 11 von einer physikalisch gesicherten Zentrale 20 aus über ein Telekommunikationsnetz 19 mit Hauptschlüsseln und anderen Informationen versorgt. Diverse Kontrollgeräte 21, 22, die immobile Anwendungen (Schwimmbäder, Telefone) bedienen, sind ebenfalls mit dieser Zentrale 20 verbunden. Andere Kontrollgeräte 23 bedienen mobile Anwendungen, beispielsweise Buslinien 24, und arbeiten autark. Alle Abrechnungen, welche die Endgeräte 11 mit den Chipkarten 17 vornehmen, werden regelmäßig den Verrechnungsstellen 25 (z.B. Banken) mitgeteilt.

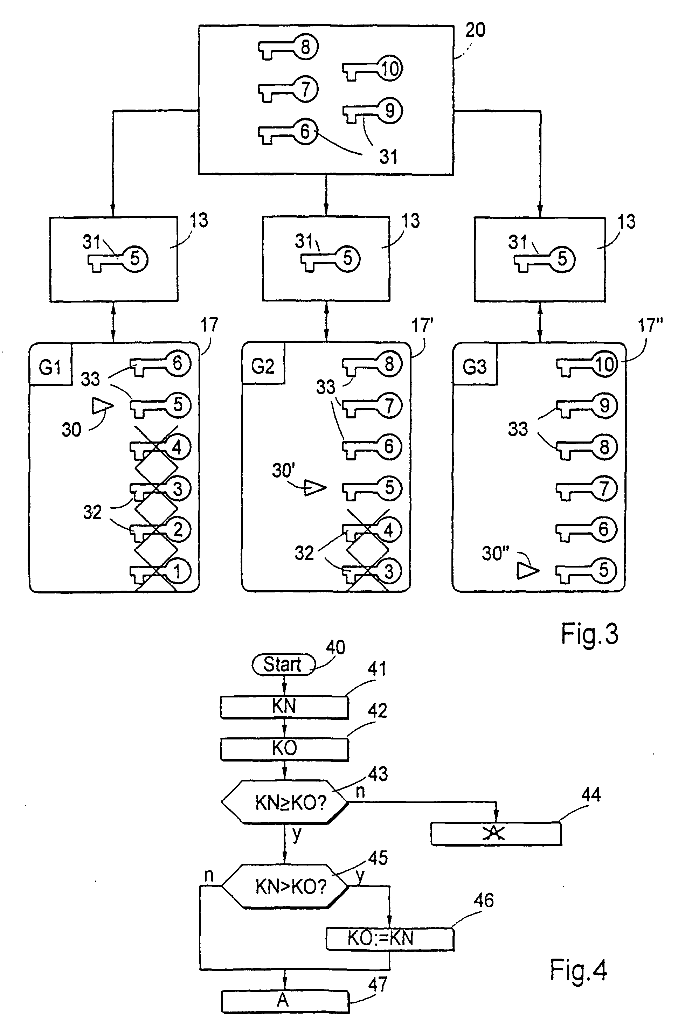

Fig. 3 zeigt, wie Schlüssel 32, 33 auf den Chipkarten 17, 17', 17" unbrauchbar werden und wie die Sicherheitsmodule 13 mit neuen Hauptschlüsseln (Masterkey) 31 versorgt werden. Die Hauptschlüssel 31 sind entsprechend ihrer zeitlichen Gültigkeit durchnumeriert. Dazu passende Schlüssel 32, 33 auf den Chipkarten 17, 17', 17" sind ebenfalls mit Nummern versehen, wobei die Schlüssel 33 zu dem mit jeweils gleicher Nummer versehenen Hauptschlüssel 31 passen. Die jeweils durch einen Pfeil symbolisierten Zähler 30, 30', 30" werden beispielsweise jedes halbe Jahr inkrementiert, das heißt bei der ersten Benutzung nach diesem Zeitraum. Alle Schlüssel 32 mit einer kleineren Nummer als der Zählerstand, sind unwirksam und daher in der Figur durchgestrichen. Die Chipkarten 17, 17', 17" haben eine Gültigkeitsdauer von drei Jahren, brauchen also jeweils sechs Schlüssel 32, 33. Jedes Jahr werden neue Chipkarten 17, 17', 17" ausgegeben, so daß die neuen Chipkarten 17, 17', 17" jeweils zwei neue Schlüssel 33 gegenüber der jeweils älteren 17, 17" benötigen. Die Chipkarte 17 ist demnach etwa zwei Jahre alt, Chipkarte 17' ein Jahr und die Chipkarte 17" ist neu. Es sind bei diesem Beispiel ständig drei Generationen G1, G2, G3 von Chipkarten mit insgesamt sechs unwirksamen und wirksamen Schlüsseln 32, 33 im Umlauf.

Wenn die Zentrale 20 einen neuen Hauptschlüssel 31 an die Sicherheitsmodule 13 verteilt, werden nach und nach die Zähler 30, 30', 30" aller Chipkarten 17, 17', 17" inkrementiert, sobald sie mit einem Sicherheitsmodul 13 kommunizieren. Auf diese Weise ist es ausgeschlossen, daß ein Betrüger mit dem Diebstahl eines Sicherheitsmoduls 13 in den Besitz aller Hauptschlüssel 31 kommt, die für die aktuell gültigen Chipkarten 17, 17', 17" vorgehalten werden müssen. Er hat nur die Chance, einen einzigen Hauptschlüssel 31 (mit der Nummer 5) zu erbeuten. Innerhalb des halben Jahres, in dem der erbeutete Hauptschlüssel 31 gültig ist läßt sich ein Betrug jedoch kaum gewinnbringend ausführen.

Das Flußdiagramm gemäß Fig. 4 zeigt die Anwendung eines Schlüssels, wobei nach einem Start bei 40 bei 41 der neue Schlüssel KN und bei 42 der alte Schlüssel KO gelesen werden. Bei 43 wird geprüft, ob der neue Schlüssel KN neuer als oder gleich alt wie der bis dahin verwendete alte Schlüssel KO ist. Ist dies nicht der Fall, wird die Operation bei 44 abgebrochen. Anderenfalls wird bei 45 geprüft, ob der neue Schlüssel KN neuer als der alte Schlüssel KO ist. Zutreffendenfalls wird im Schritt 46 KO auf KN gesetzt. In beiden Fällen wird bei 47 die Berechtigung A freigegeben.

## Patentansprüche

1. Tragbarer Datenträger, insbesondere Chipkarte, zum Speichern von Daten in Form von Datensätzen, wobei zur Absicherung des Schreibens und Lesens der Datensätze kryptographische Schlüssel (32, 33) und eine Reihe von Schlüsseln (32, 33) für den jeweiligen Verwendungszweck auf dem Datenträger (7) gespeichert sind, **dadurch gekennzeichnet, daß** Mittel (30) zur Unbrauchbarmachung von Schlüsseln (32, 33) im Datenträger (7) vorgesehen sind.

2. Datenträger nach Anspruch 1, **dadurch gekennzeichnet, daß** als Mittel zur Unbrauchbarmachung ein Zähler (30) vorgesehen ist, wobei jedem Schlüssel (32, 33) auf dem Datenträger ein Zählerwert zugeordnet ist, daß der Zähler (30) nicht dekrementierbar ist und daß diejenigen Schlüssel (32) unbrauchbar sind, deren Zählerwert kleiner als der zählerstand ist.

3. Datenträger nach einem der vorhergehenden Ansprüche, **gekennzeichnet durch** Speicherplatz zur Aufnahme eines Identifikationsmerkmals (42) des zum Schreiben eines Datensatzes zuletzt verwendeten Schlüssels (33), beispielsweise des dem Schlüssel (33) zugeordneten Zählerwertes.

4. Datenträger nach einem der vorhergehenden Ansprüche, **dadurch gekennzeichnet, daß** in jedem Datensatz, insbesondere Berechtigungsdatensatz, Speicherplatz vorgesehen ist, worin ein Identifikationsmerkmal (42) desjenigen Schlüssels (33) speicherbar ist, mit dem der Datensatz zuletzt geschrieben wurde.

5. Verfahren zur Benutzung eines Datenträgers nach einem der vorhergehenden Ansprüche, **dadurch gekennzeichnet, daß** vor jeder Benutzung eines Schlüssels (33) zum Schreiben oder Lesen von Daten geprüft wird, ob der Schlüssel (33) älter ist als derjenige, dessen Identifikationsmerkmal (42) auf dem Datenträger gespeichert ist und daß bei positivem Ergebnis dieser Prüfung die Benutzung des Schlüssels (33) durch im Datenträger vorgesehene Mittel abgelehnt wird.

6. Verfahren nach Anspruch 5, **dadurch gekennzeichnet, daß** vor jeder Benutzung eines Schlüssels (33) zum Schreiben oder Lesen von Daten geprüft wird, ob er neuer ist als derjenige, dessen Identifikationsmerkmal (42) auf dem Datenträger gespeichert ist, daß bei positivem Ergebnis dieser Prüfung das gespeicherte Identifikationsmerkmal (42) durch eines (40) des neueren Schlüssels ersetzt wird und daß alle älteren Schlüssel (32) auf dem Datenträger unbrauchbar gemacht werden.

7. Verfahren nach einem der Ansprüche 5 oder 6, **dadurch gekennzeichnet, daß** ein zu lesender Datensatz, insbesondere Berechtigungsdatensatz, der mit einem über ein vorgegebenes Maß veralteten Schlüssel geschrieben ist, verworfen wird und insbesondere die Berechtigung verworfen wird.

## Claims

1. Portable data carrier, more particularly a chipcard, for storing data in the form of data records, wherein, for securing the writing and reading of the data records, cryptographic keys (32, 33) and a series of keys (32, 33) for the respective application are stored on the data carrier (7), **characterized in that** means (30) are provided in the data carrier (7) for the disabling of keys (32, 33).

2. Data carrier according to claim 1, **characterized in that** a counter (30) is provided as the disabling means, each key (32, 33) on the data carrier being associated with a counter value; **in that** the counter (30) is not decrementable; and **in that** those keys (32) are disabled whose counter value is smaller than the count of the counter.

3. Data carrier according to any one of the preceding claims, **characterized by** storage space for holding an identification feature (42) of the key (33) last used for writing a data record, for example the counter value associated with the key (33).

4. Data carrier according to any one of the preceding claims, **characterized in that** each data record, more particularly each authorization data record, is provided with storage space in which it is possible to store an identification feature (42) of that key (33) with which the data record was last written.

5. Method for using a data carrier according to any one of the preceding claims, **characterized in that**, before each use of a key (33) for the writing or reading of data, it is checked whether the key (33) is older than that key whose identification feature (42) is stored on the data carrier and **in that**, if the result of this check is positive, the use of the key (33) is rejected by means provided in the data carrier.

6. Method according to claim 5, **characterized in that**, before each use of a key (33) for the writing or reading of data, it is checked whether the key (33) is newer than that key whose identification feature (42) is stored on the data carrier; **in that**, if the result of this check is positive, the stored identification feature (42) is replaced by one (40) of the newer key; and **in that** all older keys (32) on the data carrier are disabled.

7. Method according to any one of claims 5 or 6, **characterized in that** a data record to be read, more particularly an authorization data record, which is written with a key older than a specified age is rejected and, more particularly, the authorization is rejected.

## Revendications

1. Support de données portatif, en particulier, carte à puce, destiné à mémoriser des données sous la forme d'articles, dans lequel l'écriture et la lecture des articles fait l'objet d'une protection par des clés cryptographiques (32, 33) et une série de clés (32, 33) mémorisées à leurs fins respectives sur le support de données (7), **caractérisé en ce que** des moyens (30) de mise hors d'usage des clés (32, 33) sont prévus dans le support de données (7).

2. Support de données selon la revendication 1, **caractérisé en ce qu'**un compteur (30) est prévu en tant que moyen de mise hors d'usage, une valeur de comptage étant assignée à chaque clé (32, 33) sur le support de données, **en ce que** le compteur (30) n'est pas décrémentable et **en ce que** ne sont pas utilisables les clés (32) dont la valeur de comptage est plus petite que l'index du compteur.

3. Support de données selon l'une quelconque des revendications précédentes, **caractérisé par** un espace mémoire destiné à l'enregistrement d'une caractéristique d'identification (42) de la dernière clé utilisée (33) pour l'écriture d'un article, par exemple de la valeur de comptage assignée à la clé (33).

4. Support de données selon l'une quelconque des revendications précédentes, **caractérisé en ce que**, dans chaque article, en particulier dans chaque article d'autorisation, un espace mémoire est prévu, dans lequel est mémorisable une caractéristique d'identification (42) de la clé (33) avec laquelle l'article a été écrit en dernier lieu.

5. Procédé d'utilisation d'un support de données selon l'une des revendications précédentes, **caractérisé en ce que**, avant chaque utilisation d'une clé (33) pour l'écriture ou la lecture de données, on vérifie que la clé (33) est plus ancienne que celle dont la caractéristique d'identification (42) est mémorisée sur le support de données et **en ce que**, dans l'affirmative, l'utilisation de la clé (33) par des moyens prévus dans le support de données est refusée.

6. Procédé selon la revendication 5, **caractérisé en ce que**, avant chaque utilisation d'une clé (33) pour l'écriture ou la lecture de données, on vérifie si elle est plus récente que celle dont la caractéristique d'identification (42) est mémorisée sur le support de données, **en ce que**, dans l'affirmative, la caractéristique d'identification mémorisée (42) est remplacée par une caractéristique d'identification (40) de la nouvelle clé et **en ce que** toutes les clés plus anciennes (32) sont rendues inutilisables sur le support de données.

7. Procédé selon l'une des revendications 5 ou 6, **caractérisé en ce qu'**un article à lire, en particulier un article d'autorisation, écrit avec une clé périmée depuis plus longtemps qu'une date prédéterminée, est rejeté, l'autorisation étant en particulier rejetée.
